# EUROPEAN PATENT APPLICATION

(11) **EP 4 280 690 A1**
(43) Date of publication of application: **22.11.2023**
(21) Application number: 21919416.4
(22) Date of filing: 18.01.2021
(51) Int. Cl.: H04W 36/14, H04W 48/18, H04W 88/04

(54) **COMMUNICATION DEVICE, COMMUNICATION METHOD, AND PROGRAM**

(71) Applicant: Sony Group Corporation, Tokyo 108-0075 (JP)
(72) Inventor: HORITA, Koki, Tokyo 140-0002 (JP)
(74) Representative: 2SPL Patentanwälte PartG mbB
(86) International application number: PCT/JP2021/001423
(87) International publication number: WO 2022/153523

(57) **Abstract**

A communication device has a plurality of communication functions of connecting to an upstream network using different communication channels individually. The communication device includes: a communication control unit that controls communication with another communication device connected to the upstream network via the communication device; and a notification unit that notifies, before switching the communication channel, the another communication device of information related to the communication channel for the switching of the communication channel.

## Description

### Field

The present disclosure relates to a communication device, a communication method, and a program.

### Background

There is known a technique by which a communication device connects to an upstream network by using a communication function of another communication device. Known examples of such a technology include a technology referred to as tethering by which a terminal device such as a PC or a tablet is connected to an upstream network using a communication function of another terminal device such as a smartphone.

### Citation List

### Patent Literature

Patent Literature 1: JP 2015-39147 A

### Summary

### Technical Problem

In many cases, a terminal device such as a smartphone is connectable to a plurality of communication channels (for example, Wi-Fi and a cellular network). The terminal device appropriately switches the communication channels in accordance with the state of the communication channel.

When the communication device (hereinafter, referred to as a client device) is connected to an upstream network by using the communication function of another communication device (hereinafter, referred to as a host device), the communication channel is switched depending on the convenience of the host device. This causes the upstream network to be switched at an unintended timing for the client device, making it difficult to perform reliable connection to the upstream network.

Therefore, the present disclosure proposes a communication device, a communication method, and a program capable of realizing highly reliable communication.

Note that the above problem or target is merely one of a plurality of problems or targets that can be solved or achieved by a plurality of embodiments disclosed in the present specification.

### Solution to Problem

In order to solve the above problem, a communication device according to one aspect of the present disclosure having a plurality of communication functions of connecting to an upstream network using different communication channels individually, the communication device includes: a communication control unit that controls communication with another communication device connected to the upstream network via the communication device; and a notification unit that notifies, before switching the communication channel, the another communication device of information related to the communication channel for the switching of the communication channel.

### Brief Description of Drawings

FIG. 1 is a diagram illustrating an outline of the present embodiment.
FIG. 2 is a diagram illustrating a flow of processing in a case where disconnection of a communication channel connected to an upstream network is predicted.
FIG. 3 is a diagram illustrating a flow of processing in a case where quality deterioration in a communication channel connected to an upstream network is predicted.
FIG. 4 is a diagram illustrating a configuration example of a communication system according to an embodiment of the present disclosure.
FIG. 5 is a diagram illustrating a configuration example of a server device according to the embodiment of the present disclosure.
FIG. 6 is a diagram illustrating a configuration example of a terminal device (host device) according to the embodiment of the present disclosure.
FIG. 7 is a diagram illustrating a configuration example of a terminal device (client device) according to the embodiment of the present disclosure.
FIG. 8 is a diagram illustrating a functional configuration of a communication system 1.
FIG. 9 is a flowchart illustrating a first processing example (prediction of disconnection of a communication channel connected to an upstream network).
FIG. 10 is a sequence diagram illustrating initial setup.
FIG. 11 is a flowchart illustrating a second processing example (quality prediction of a communication channel connected to an upstream network).
FIG. 12 is a sequence diagram illustrating initial setup.
FIG. 13 is a functional block diagram illustrating initial setup.
FIG. 14 is a diagram illustrating a file format of information indicating notification criteria.
FIG. 15 is a functional block diagram illustrating quality prediction using machine learning.
FIG. 16 is a functional block diagram illustrating an operation of a terminal device (client device) at the time of communication channel quality nonattainment.
FIG. 17 is a functional block diagram illustrating an operation of a terminal device (client device) at the time of communication channel quality nonattainment.

### Description of Embodiments

Embodiments of the present disclosure will be described below in detail with reference to the drawings. In each of the following embodiments, the same parts are denoted by the same reference symbols, and a repetitive description thereof will be omitted.

Moreover, in the present specification and the drawings, a plurality of components having substantially the same functional configuration will be distinguished by attaching different numbers after the same reference numerals. For example, a plurality of configurations having substantially the same functional configuration are distinguished as necessary, such as terminal devices 30₁ and 30₂. However, when it is not particularly necessary to distinguish between the plurality of components having substantially the same functional configuration, only the same reference numeral is given. For example, in a case where it is not necessary to particularly distinguish the terminal devices 30₁ and 30₂, they are simply referred to as the terminal device 30.

One or a plurality of embodiments (examples and modifications) described below can each be implemented independently. On the other hand, at least some of the plurality of embodiments described below may be appropriately combined with at least some of other embodiments. The plurality of embodiments may include novel features different from each other. Accordingly, the plurality of embodiments can contribute to achieving or solving different objects or problems, and can exhibit different effects.

The present disclosure will be described in the following order.
1. Overview
2. Configuration of communication system
   2-1. Configuration of server device
   2-2. Configuration of terminal device (host device)
   2-3. Configuration of terminal device (client device)
   2-4. Functional configuration of communication system
3. First processing example (prediction of disconnection of communication channel connected to upstream network)
4. Second processing example (prediction of quality of communication channel connected to upstream network)
5. Modification
6. Conclusion

### <<1. Overview>>

### <1-1. Outline of Problem>

There is known a technique by which a communication device connects to an upstream network by using a communication function of another communication device. A known example of such a technique is a technique referred to as tethering.

In many cases, a terminal device such as a smartphone is connectable to a plurality of communication channels. The terminal device appropriately switches the communication channels in accordance with the state of the communication channel. When the communication status of the upstream network deteriorates in communication using tethering, the tethering host device switches the upstream network with no consideration of the communication status of the tethering client device. For example, when the upstream network is Wi-Fi and when this Wi-Fi connection is expected to be disconnected, the tethering host device switches the upstream network to a cellular network.

However, this switching timing is not necessarily optimal for the tethering client device terminal. Switching the upstream networks when the client device is during communication using tethering will update a NAT table to cause the tethering client device to have a communication disconnection. Switching to a route in a better communication state for the tethering host device causes disconnection of a communication flow for the tethering client device.

In this manner, in the current tethering communication, the communication of the client device can be hindered depending on the switching timing of the upstream network.

### <1-2. Outline of solution>

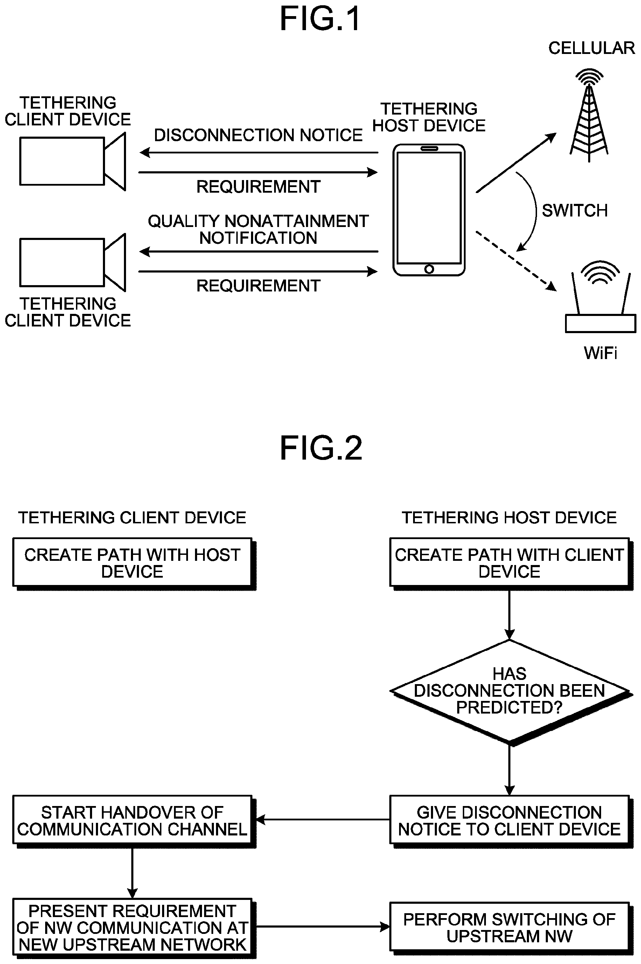

FIG. 1 is a diagram illustrating an outline of the present embodiment. The tethering host device in the example of FIG. 1 can use two communication channels, which are cellular and Wi-Fi, for example.

In the present embodiment, when the disconnection of the current communication channel to the upstream network (including switching of the upstream network) is predicted, the tethering host device pre-notifies the tethering client device of the prediction ("disconnection notice" illustrated in FIG. 1). In addition, when the quality deterioration of the communication channel connected to the upstream network is predicted, the tethering host device notifies the tethering client device of the prediction ("quality nonattainment notification" illustrated in FIG. 1). Subsequently, the tethering client device presents a requirement to the tethering host device to suppress a change in the communication channel connected to the upstream network ("requirement" illustrated in FIG. 1). In addition, the tethering client device safely ends the current flow by taking over the flow or forming link aggregation so as to enable communication using another communication channel.

This suppresses occurrence of disconnection of communication for the tethering client device, making it possible to provide highly reliable communication for the tethering client device.

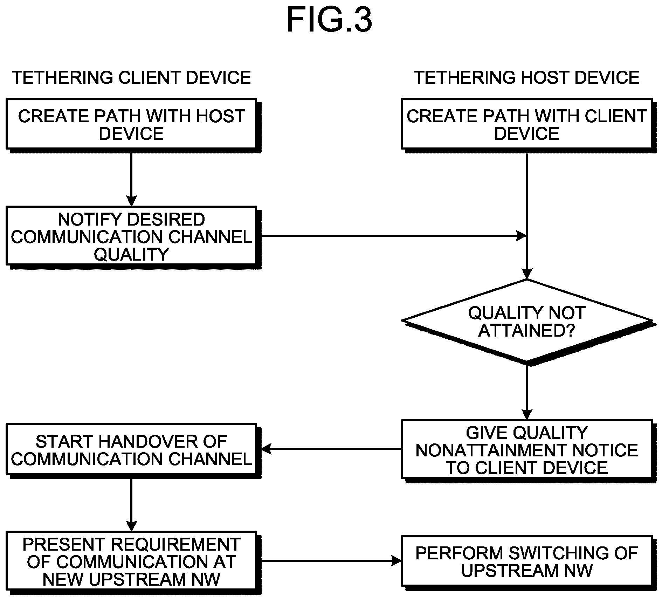

Processing for implementing this mechanism will be described with reference to FIGS. 2 and 3.

### (Prediction of disconnection of communication channel)

First, a case where disconnection of a communication channel connected to an upstream network (including switching of a communication channel) is predicted will be described. FIG. 2 is a diagram illustrating a flow of processing in a case where disconnection of a communication channel connected to an upstream network is predicted.

First, the tethering host device and the tethering client device generate a path for determining a route between the tethering host device and the tethering client device. Using this path, the tethering host device preferentially allocates a communication channel desired by the tethering client device. For example, here is a predictable case where the tethering host device predicts Wi-Fi disconnection. When it is found that there is a possibility of disconnection within n seconds, the tethering host device notifies the tethering client device of a "disconnection notice".

Having received this notification, the tethering client device presumes an interruption of the flow in communication and attempts to perform safe termination of the flow and handover to a new bearer. Since there is enough time from the disconnection notice to the actual disconnection, it is possible for the tethering client device to safely suspend and resume communication.

### (Prediction of communication channel quality)

Next, the following is a case where quality deterioration of a communication channel connected to an upstream network is predicted. FIG. 3 is a diagram illustrating a flow of processing in a case where quality deterioration in a communication channel connected to an upstream network is predicted.

First, the tethering host device and the tethering client device generate a path for determining a route between the tethering host device and the tethering client device. Subsequently, using this path, the tethering client device designates communication channel characteristics to the tethering host device. For example, the tethering client device notifies the tethering host device of desired communication channel quality (for example, the maximum allowable delay, throughput, packet loss rate).

The tethering host device selects a communication channel so as to satisfy the communication channel quality. Furthermore, even when a path with good communication channel quality is found, the tethering host device does not switch the communication channel because there is a possibility that the communication channel will be disconnected due to handover. The tethering host device monitors the packet counter of the communication channel and predicts the communication channel quality at the current time and the communication channel quality after n seconds. Using results of this prediction, when the communication channel quality designated by the tethering client device cannot be satisfied, the tethering host device automatically switches the upstream network. Alternatively, the tethering host device notifies the tethering client device of quality nonattainment. More specifically, the tethering host device gives a notice to the tethering client device that the current quality of the communication channel will not attain the required quality, which is a quality required sent from the tethering client device.

Upon receiving this notification, the tethering client device attempts to perform safe termination of the current flow and handover to a new bearer. At this time, when the communication channel quality cannot be satisfied even with the new bearer, the tethering client device adjusts the use band of the application being used. For safe termination of a flow, the tethering client device may initiate signaling with a communication partner server to inherit an ID of an existing flow and create a new flow so as to initiate communication from another communication channel in a higher layer (QUIC). The tethering client device may apply multipath using a plurality of bearers (multipath TCP). In addition, the tethering client device may be set to enable bypass route control using a redundancy technology (such as VRRP, OSPF, and BGP) in L3 at the time of disconnection of communication. Moreover, the tethering client device may send a requirement to use a redundancy technology (such as link aggregation) in L2. In the application layer, the tethering client device may temporarily suspend an operating flow, enable communication from the middle, or close an existing flow socket. In this manner, there are various termination options.

### (Downstream network disconnection prediction)

Note that the tethering host device may monitor the communication quality of the communication channel between the tethering host device and the tethering client device. In addition, the tethering host device may predict disconnection of the communication channel between the tethering host device and the tethering client device. When having found that disconnection will occur within n seconds, the tethering host device may send a disconnection notice to the tethering client device. Having received this notification, the tethering client device may presume an interruption of the flow in communication and attempt to perform safe termination of the flow and handover to a new bearer.

### <1-3. Effects>

When disconnection of communication or the deterioration of the communication channel quality is predicted, the tethering host device gives a communication disconnection notice to the tethering client device. This makes it possible for the tethering client device to perform handover beforehand or safe termination of the flow. This enables the tethering client device to prevent a situation in which an unintended termination of the flow causes an error in application operations (for example, the failure of downloading or starting over downloading), or a situation in which a socket left open causes a failure in establishing the next communication channel. In addition, any of communication channels is established at any time with higher probability, enabling establishment of highly reliable communication.

The outline of the present embodiment has been described above. Hereinafter, a communication system 1 according to the present embodiment will be described in detail.

### <<2. Configuration of communication system>>

First, a configuration of the communication system 1 will be described.

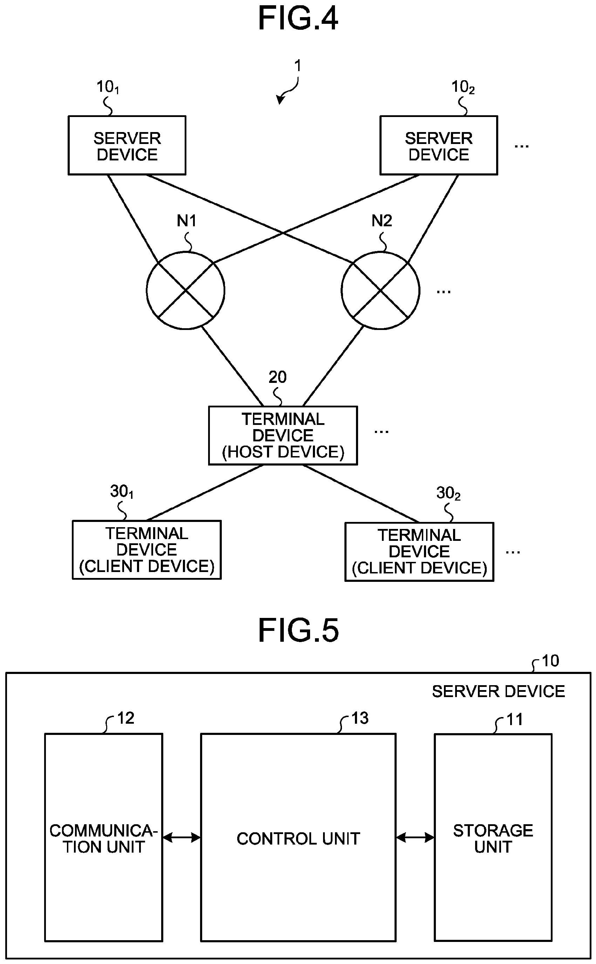

FIG. 4 is a diagram illustrating a configuration example of the communication system 1 according to an embodiment of the present disclosure. The communication system 1 includes at least a host device connectable to a plurality of communication channels and a client device connected to an upstream network via the host device. Here, examples of the host device include a terminal device 20 illustrated in FIG. 4, and examples of the client device include terminal devices 30₁ and 30₂ illustrated in FIG. 4. The terminal devices 20 and 30 support tethering. The terminal device 30 is connected to the upstream network via the terminal device 20 using the tethering function.

Here, the upstream network is a higher network as viewed from the terminal device 20 used as the host device. In the example illustrated in FIG. 4, the upstream networks are networks N1 and N2. Examples of the networks N1 and N2 include communication networks such as a local area network (LAN), a wide area network (WAN), a cellular network, a fixed-line telephone network, a regional Internet protocol (IP) network, and the Internet. The networks N1 and N2 may include a wired network or a wireless network. In addition, the networks N1 and N2 may include a core network. Examples of the core network include an Evolved Packet Core (EPC) or a 5G Core network (5GC). The network N may unquestionably be a data network connected to the core network. The data network may be a service network of a telecommunications carrier, for example, an IP Multimedia Subsystem (IMS) network. Furthermore, the data network may be a private network such as an intranet.

Although only two upstream networks are illustrated in the example of FIG. 4, the number of upstream networks is not limited to two. For example, assuming that the upstream network is a cellular network including a radio access network and a core network, a plurality of core networks may exist as the upstream network. At this time, different data networks may exist for each core network.

As described above, the terminal device 20 can be connected to an upstream network using a plurality of communication channels. At this time, at least one of the plurality of communication channels may be a wireless communication channel. For example, the communication channel may be a wireless communication channel (radio access network) between the terminal device 20 and the base station. Furthermore, the communication channel may be a wireless communication channel between the terminal device 20 and the access point. The plurality of communication channels may unquestionably include a wired communication channel (for example, a wired LAN). Note that the communication channel may be an upstream network itself.

In a case where a wireless communication channel is included in a plurality of communication channels, the terminal device 20 may be configured to connect to the upstream network using a radio access technology (RAT) such as long term evolution (LTE), new radio (NR), Wi-Fi, or Bluetooth (registered trademark). At this time, the terminal device 20 may be configured to be able to use different radio access technologies. For example, the terminal device 20 may be configured to be able to use NR and Wi-Fi. Furthermore, the terminal device 20 may be configured to be able to use different cellular communication technologies (for example, LTE and NR). LTE and NR are a type of cellular communication technology, and enable mobile communication of terminal devices by using cellular arrangement of a plurality of areas covered by base stations.

In the following, it is assumed that "LTE" includes LTE-advanced (LTE-A), LTE-advanced pro (LTE-A Pro), and evolved universal terrestrial radio access (EUTRA). In addition, it is assumed that NR includes new radio access technology (NRAT) and further EUTRA (FEUTRA). A single base station may manage a plurality of cells. In the following, a cell corresponding to LTE may be referred to as an LTE cell, and a cell corresponding to NR may be referred to as an NR cell.

NR is the next generation (fifth generation) radio access technology subsequent to LTE (fourth generation communication including LTE-Advanced and LTE-Advanced Pro). The NR is a radio access technology that can support various use cases including enhanced mobile broadband (eMBB), massive machine type communications (mMTC), and Ultra-Reliable and Low Latency Communications (URLLC). NR is being studied with the aim of creating a technical framework that supports use scenarios, requirements, and deployment scenarios for these use cases.

Note that the terminal device 20 may be connectable to the upstream network using a radio access technology other than LTE, NR, Wi-Fi, or Bluetooth. For example, the terminal device 20 may be connectable to an upstream network by using low power wide area (LPWA) communication. Furthermore, the terminal device 20 may be connectable to the upstream network using wireless communication of a proprietary standard.

Here, LPWA communication is wireless communication that enables low-power wide-range communication. For example, the LPWA wireless is Internet of Things (IoT) wireless communication using a specified low power wireless (for example, the 920 MHz band) or an Industry-Science-Medical (ISM) band. Note that the LPWA communication used by the terminal device 20 may conform to the LPWA standard. Examples of the LPWA standard include ELTRES, ZETA, SIGFOX, LoRaWAN, and NB-Iot. Needless to say, the LPWA standard is not to be limited thereto, and may be other LPWA standards.

Note that the plurality of communication channels may include a virtual network. For example, the plurality of communication channels connectable by the terminal device 20 may include a virtual network such as a virtual local area network (VLAN) and a physical network such as an IP communication channel. In this case, the terminal device 20 may perform route control based on a route control protocol such as Open Shortest Path First (OSPF) or Border Gateway Protocol (BGP).

In addition, the plurality of communication channels may include one or a plurality of overlay networks or one or a plurality of network slicing sets.

As illustrated in FIG. 4, the communication system 1 includes a server device 10, a terminal device 20 (host device), and a terminal device 30 (client device). The communication system 1 may include a plurality of server devices 10, a plurality of terminal devices 20, and a plurality of terminal devices 30. In the example of FIG. 4, the communication system 1 includes server devices 10₁, 10₂, etc., as the server device 10, and terminal devices 30₁, 30₂, etc., as the terminal device 30.

The device in the figure may be considered as a device in a logical sense. That is, the devices in the drawing may be partially or entirely actualized by a virtual machine (VM), a container, a docker, or the like, and they may be implemented on physically the same piece of hardware.

Furthermore, in the present embodiment, a communication device is a device having a communication function, and in the example of FIG. 4, at least the terminal device 20 and the terminal device 20 are communication devices.

Hereinafter, configurations of individual devices included in the communication system 1 will be specifically described. The configuration of each device illustrated below is just an example. The configuration of each device may differ from the configuration below.

### <2-1. Configuration of server device>

First, a configuration of the server device 10 will be described.

The server device 10 is an information processing device (computer) that provides various services to the terminal device 30 via an upstream network (for example, networks N1 and/or N2). For example, the server device 10 is an application server or a web server. The server device 10 may be a PC server, a midrange server, or a mainframe server.

FIG. 5 is a diagram illustrating a configuration example of the server device 10 according to the embodiment of the present disclosure. The server device 10 includes a storage unit 11, a communication unit 12, and a control unit 13. The configuration illustrated in FIG. 5 is a functional configuration, and the hardware configuration may be different from this. Furthermore, the functions of the server device 10 may be implemented in a distributed manner in a plurality of physically separated configurations. For example, the server device 10 may include a plurality of information processing devices.

The storage unit 11 is a data readable/writable storage device such as dynamic random access memory (DRAM), static random access memory (SRAM), a flash drive, or a hard disk. The storage unit 11 functions as a storage means of the server device 10. The storage unit 11 stores various data for providing services to the terminal devices 20 and 30, for example.

The communication unit 12 is a communication interface for communicating with other devices. For example, the communication unit 12 is a network interface. An example of the communication unit 12 is a local area network (LAN) interface such as a Network Interface Card (NIC). The communication unit 12 may be a wired interface, or may be a wireless interface. The communication unit 12 functions as a communication means of the server device 10. The communication unit 12 communicates with the terminal devices 20 and 30 under the control of the control unit 13.

The control unit 13 is a controller that controls individual units of the server device 10. The control unit 13 is implemented by a processor such as a central processing unit (CPU) or a micro processing unit (MPU), for example. For example, the control unit 13 is actualized by execution of various programs stored in the storage device inside the server device 10 by the processor using random access memory (RAM) or the like as a work area. Note that the control unit 13 may be implemented by an integrated circuit such as an application specific integrated circuit (ASIC) or a field programmable gate array (FPGA). The CPU, MPU, ASIC, and FPGA can all be regarded as controllers.

### <2-2. Configuration of terminal device (host device)>

Next, a configuration of the terminal device 20 will be described.

The terminal device 20 is a communication device that communicates with other communication devices such as a base station, an access point, and the terminal device 30. The terminal device 20 has a tethering function (tethering host function) and relays the terminal device 30 to access to the upstream network.

Examples of the terminal device 20 include a mobile phone, a smart device (smartphone or tablet), a personal digital assistant (PDA), or a personal computer. Furthermore, the terminal device 20 may be an imaging device (such as a cam-coder, for example) equipped with a communication function, or may be a motorcycle, a moving relay vehicle, or the like on which communication equipment such as a Field Pickup Unit (FPU) is mounted. The terminal device 20 may be a Machine to Machine (M2M) device or an Internet of Things (IoT) device. The terminal device 20 may be a router having a plurality of communication channels.

Furthermore, the terminal device 20 may be able to perform LPWA communication with other communication devices (such as a base station, an access point, and a terminal device 30, for example). In addition, the wireless communication used by the terminal device 20 may be wireless communication using millimeter waves. The wireless communication used by the terminal device 20 may be wireless communication using radio waves or wireless communication (optical wireless communication) using infrared rays or visible light.

The terminal device 20 may be a mobile device. The mobile device is a movable wireless communication device. At this time, the terminal device 20 may be a wireless communication device installed on a mobile body, or may be the mobile body itself. For example, the terminal device 20 may be a vehicle that moves on a road, such as an automobile, a bus, a truck, or a motorbike, or may be a wireless communication device mounted on the vehicle. The mobile body may be a mobile terminal, or may be a mobile body that moves on land, in the ground, on water, or under water. Furthermore, the mobile body may be a mobile body that moves inside the atmosphere, such as a drone or a helicopter, or may be a mobile body that moves outside the atmosphere, such as an artificial satellite.

The terminal device 20 may perform communication while being simultaneously connected to a plurality of base stations or a plurality of cells. For example, when one base station supports a communication area via a plurality of cells (for example, pCell and sCell), it is possible to bundle the plurality of cells and communicate between the base station and the terminal device 20 by using a carrier aggregation (CA) technology, a dual connectivity (DC) technology, or a multi-connectivity (MC) technology. Alternatively, the terminal device 20 and the plurality of base stations can communicate with each other by a Coordinated Multi-Point Transmission and Reception (CoMP) technology via cells of different base stations.

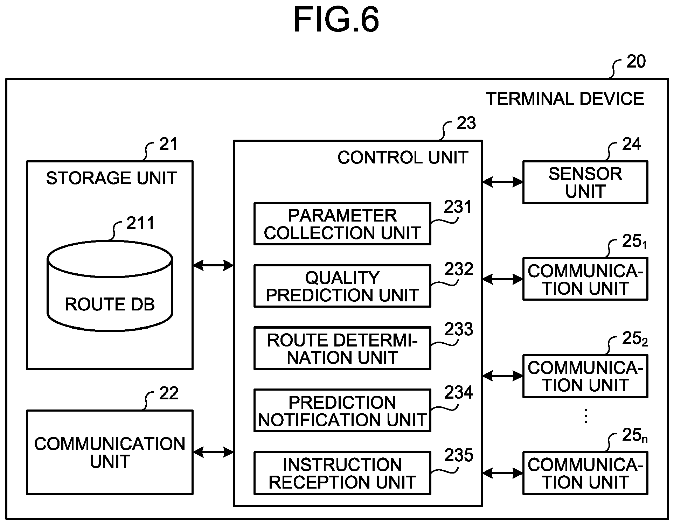

FIG. 6 is a diagram illustrating a configuration example of the terminal device (host device) 20 according to the embodiment of the present disclosure. The terminal device 20 includes a storage unit 21, a communication unit 22, a control unit 23, a sensor unit 24, and a plurality of communication units 25 (communication unit 25₁ to 25ₙ: n is any integer). Note that the configuration illustrated in FIG. 6 is a functional configuration, and the hardware configuration may be different from this. Furthermore, the functions of the terminal device 20 may be implemented in a distributed manner in a plurality of physically separated configurations.

The storage unit 21 is a data readable/writable storage device such as DRAM, SRAM, a flash drive, and a hard disk. The storage unit 21 functions as a storage means in the terminal device 20. The storage unit 21 stores a route database 211, for example. The route database 211 is, for example, a database that stores a route to the server device 10. An example of the route database 211 is a routing table.

The communication unit 22 is a communication interface for communicating with other devices (for example, a client device such as the terminal device 30) located downstream. For example, the communication unit 22 is a network interface. For example, the communication unit 22 is a LAN interface such as an NIC. The communication unit 22 may be a wired interface, or may be a wireless interface. The communication unit 22 functions as a communication means of the terminal device 20. The communication unit 22 communicates with the terminal device 30 under the control of the control unit 23. In the present embodiment, while the communication unit 22 is a communication interface with a downstream device (that is, a client device), the communication unit 22 may have a configuration common to the communication unit 25.

The control unit 23 is a controller that controls individual parts of the terminal device 20. The control unit 23 is actualized by a processor such as a CPU or an MPU, for example. For example, the control unit 23 is implemented by a processor executing various programs stored in a storage device inside the terminal device 20 using RAM or the like as a work area. Note that the control unit 23 may be actualized by an integrated circuit such as an ASIC or an FPGA. The CPU, MPU, ASIC, and FPGA can all be regarded as controllers. The control unit 33 may be implemented by a GPU in addition to or instead of the CPU.

The control unit 23 includes a parameter collection unit 231, a quality prediction unit 232, a route determination unit 233, a prediction notification unit 234, and an instruction reception unit 235. Each block (the parameter collection unit 231 to the instruction reception unit 235) constituting the control unit 23 is a functional block each indicating a function of the control unit 23. These functional blocks may be software blocks or hardware blocks. For example, each of the functional blocks described above may be one software module actualized by software (including a microprogram) or one circuit block on a semiconductor chip (die). Needless to say, each of the functional blocks may be formed as one processor or one integrated circuit. Note that the control unit 23 may be configured in a functional unit different from the above-described functional block. The functional block may be configured by using any method.

The sensor unit 24 is a sensor that acquires various types of information for predicting the quality of a communication channel (a communication channel formed by the communication unit 25) for connection to an upstream network. For example, assuming that the communication channel is a wireless communication channel, the sensor unit 24 is, for example, a sensor that detects reception S/N of a radio wave received from a base station or an access point. Needless to say, information acquired by the sensor unit 24 is not to be limited to the reception S/N as long as the information can be used for the quality prediction of the communication channel.

Each of the plurality of communication units 25 is a communication interface for connecting to an upstream network. The plurality of communication units 25 form different communication channels individually to the server device 10. Note that the plurality of communication units 25 may support different radio access technologies individually. For example, the communication unit 25₁ may support LTE or NR, while the communication unit 25₂ may support Wi-Fi. Note that the communication unit 25 may have a configuration common to the communication unit 22.

### <2-3. Configuration of terminal device (client device)>

Next, a configuration of the terminal device 30 will be described.

The terminal device 30 is a communication device that communicates with another communication device such as the terminal device 20. The terminal device 30 has a tethering function (tethering client function) and accesses an upstream network via the terminal device 20. The terminal device 30 may have a function of directly accessing the upstream network without intervening the terminal device 20. For example, the terminal device 30 may be directly accessible to a base station or an access point.

Examples of the terminal device 30 include a mobile phone, a smart device (smartphone or tablet), a PDA, and a personal computer. Furthermore, the terminal device 30 may be an imaging device (such as a cam-coder, for example) equipped with a communication function, or may be a motorcycle, a moving relay vehicle, or the like on which communication equipment such as an FPU is mounted. Furthermore, the terminal device 30 may be an M2M device or an IoT device. The terminal device 30 may be a router.

Furthermore, the terminal device 30 may be capable of LPWA communication with other communication devices (such as the terminal device 20, for example). In addition, the wireless communication used by the terminal device 30 may be wireless communication using millimeter waves. The wireless communication used by the terminal device 30 may be wireless communication using radio waves or wireless communication (optical wireless communication) using infrared rays or visible light.

Furthermore, the terminal device 30 may be a mobile device. The mobile device is a movable wireless communication device. At this time, the terminal device 30 may be a wireless communication device installed on a mobile body, or may be the mobile body itself. For example, the terminal device 30 may be a vehicle that moves on a road, such as an automobile, a bus, a truck, or a motorbike, or may be a wireless communication device mounted on the vehicle. The mobile body may be a mobile terminal, or may be a mobile body that moves on land, in the ground, on water, or under water. Furthermore, the mobile body may be a mobile body that moves inside the atmosphere, such as a drone or a helicopter, or may be a mobile body that moves outside the atmosphere, such as an artificial satellite.

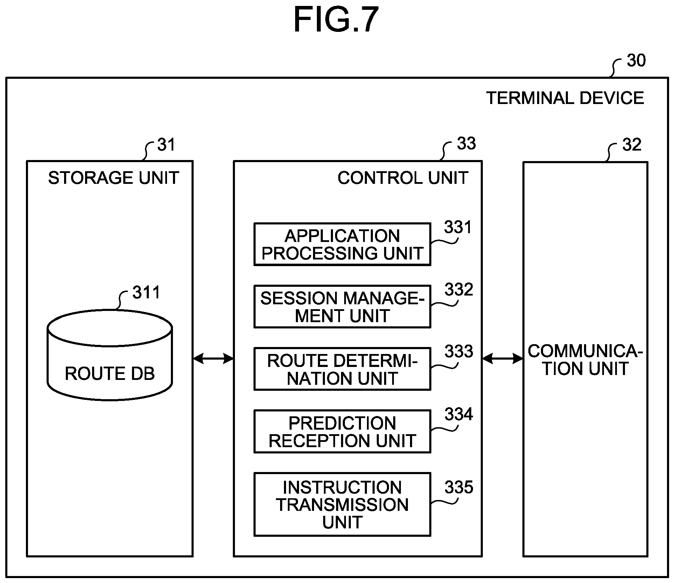

FIG. 7 is a diagram illustrating a configuration example of a terminal device 30 (client device) according to the embodiment of the present disclosure. The terminal device 30 includes a storage unit 31, a communication unit 32, and a control unit 33. Note that the configuration illustrated in FIG. 7 is a functional configuration, and the hardware configuration may be different from this. Furthermore, the functions of the terminal device 30 may be implemented in a distributed manner in a plurality of physically separated configurations.

The storage unit 31 is a data readable/writable storage device such as DRAM, SRAM, a flash drive, and a hard disk. The storage unit 31 functions as a storage means in the terminal device 30. The storage unit 31 stores a route database 311, for example. The route database 311 is a database that stores a route to the server device 10, for example. An example of the route database 311 is a routing table.

The communication unit 32 is a communication interface for communicating with other devices such as the terminal device 30. For example, the communication unit 32 is a network interface. For example, the communication unit 32 is a LAN interface such as an NIC. The communication unit 32 may be a wired interface, or may be a wireless interface. The communication unit 32 functions as a communication means of the server device 10. The communication unit 32 communicates with the terminal device 30 under the control of the control unit 33.

The control unit 33 is a controller that controls individual parts of the terminal device 30. The control unit 33 is actualized by a processor such as a CPU or an MPU, for example. For example, the control unit 33 is implemented by a processor executing various programs stored in a storage device inside the terminal device 30 using RAM or the like as a work area. Note that the control unit 33 may be implemented by an integrated circuit such as an ASIC or an FPGA. The CPU, MPU, ASIC, and FPGA can all be regarded as controllers. The control unit 33 may be implemented by a GPU in addition to or instead of the CPU.

The control unit 33 includes an application processing unit 331, a session management unit 332, a route determination unit 333, a prediction reception unit 334, and an instruction transmission unit 335. Each block (the application processing unit 331 to the instruction transmission unit 335) constituting controller 33 is a functional block indicating a function of the control unit 33. These functional blocks may be software blocks or hardware blocks. For example, each of the functional blocks described above may be one software module actualized by software (including a microprogram) or one circuit block on a semiconductor chip (die). Needless to say, each of the functional blocks may be formed as one processor or one integrated circuit. Note that the control unit 33 may be configured in a functional unit different from the above-described functional block. The functional block may be configured by using any method.

### <2-4. Functional configuration of communication system>

Next, a functional configuration of the communication system 1 will be described.

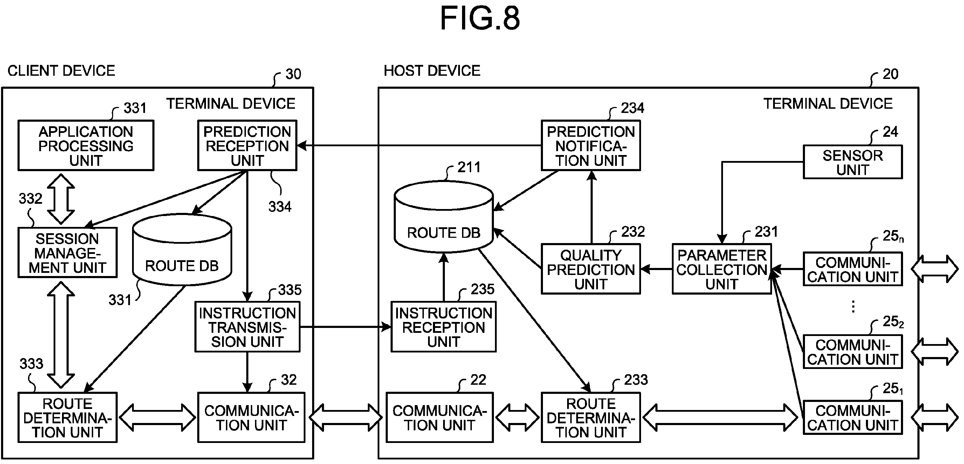

FIG. 8 is a diagram illustrating a functional configuration of a communication system 1. More specifically, FIG. 8 is a diagram illustrating a relationship between functional blocks each constituting the terminal device 20 and the terminal device 30.

In the drawing, an outlined arrow indicates a flow of data, such as user data, transmitted and received via the upstream network. Other arrows indicate the flow of control data related to the switching processing of the present embodiment.

In the present embodiment, the parameter collection unit 231 and the quality prediction unit 232 function as prediction means (prediction unit) of the terminal device 20. The route determination unit 233 and the instruction reception unit 235 function as a communication control means (communication control unit) of the terminal device 20. The prediction notification unit 234 functions as a notification means (notification unit) of the terminal device 20.

The application processing unit 331, the session management unit 332, and the route determination unit 333 function as processing means (processing unit) of the terminal device 20. The prediction reception unit 334 functions as a reception means (reception unit) of the terminal device 20. The instruction transmission unit 335 functions as an instruction means (instruction unit) of the terminal device 20.

The operation of these functional blocks will be described in detail below.

The configuration of the communication system 1 has been described above. Next, the operation of the communication system 1 having such a configuration will be described.

### <<3. First processing example (prediction of disconnection of communication channel connected to upstream network)>>

First, a first processing example will be described. The first processing example is a processing example of a case where the terminal device 20 (host device) predicts disconnection (including switching) of the current communication channel connected to an upstream network. The terminal device 20 (host device) is connected to the upstream network through one of a plurality of communication channels. The terminal device 20 (host device) predicts disconnection of the communication channel (including switching to another communication channel), and notifies the terminal device 30 (client device) of a result of the prediction.

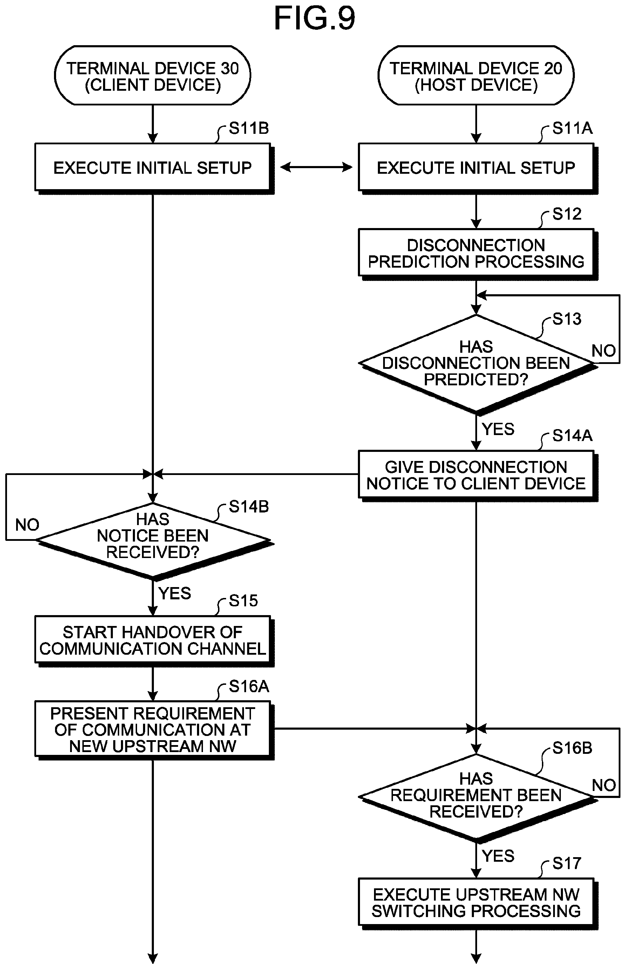

FIG. 9 is a flowchart illustrating the first processing example (prediction of disconnection of a communication channel connected to an upstream network). Hereinafter, the first processing example will be described with reference to FIG. 9.

First, the terminal device 20 and the terminal device 30 execute initial setup (steps S11A and S11B). The initial setup is processing for the terminal device 20 and the terminal device 30 to create a control path. In the first processing example, the control path is a path for exchanging various types of information regarding communication channel disconnection prediction. Note that the control path between the terminal device 20 (host device) and the terminal device 30 (client device) may be created when a network has been formed between the host device and the client device. Furthermore, in a case where the function related to the present prediction notification is enabled after the normal tethering function is enabled, the control path may be created at that time. There is no need to use a large volume of communication for this control path. On the other hand, a highly reliable communication channel is required. Therefore, it is desirable to use a stable bearer (for example, a wired LAN) different from the bearer (for example, a wireless LAN) used for data transfer between the host device and the client device.

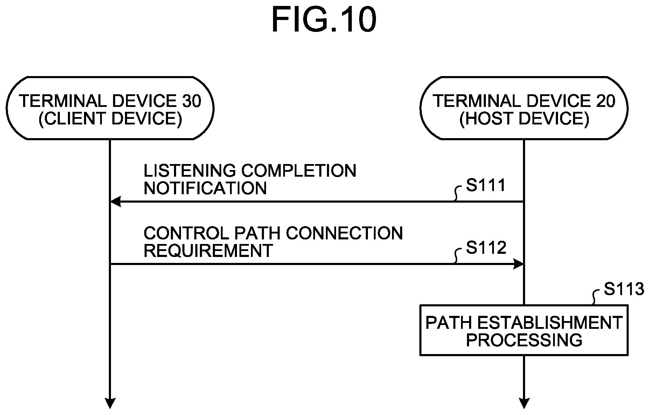

FIG. 10 is a sequence diagram illustrating initial setup. First, in order to enable communication between the host device and the client device, the terminal device 30 (client device) opens a listening port. The terminal device 20 (host device) transmits a listening completion notification to the opened port using the control path (step S111). Having received the listening completion notification from the terminal device 20, the terminal device 30 (client device) transmits a control path connection requirement to the terminal device 20 (step S112). The terminal device 20 that has received the control path connection requirement performs control path establishment processing.

Note that the terminal device 20 and the terminal device 30 may exchange information regarding the disconnection prediction in the initial setup. For example, it is assumed that the terminal device 20 predicts, as the prediction processing, whether communication using the current communication channel will be disconnected after a lapse of a predetermined time. In this case, the terminal device 30 may notify the terminal device 30 of information designating the predetermined time in the initial setup.

Returning to the flow of FIG. 9, the terminal device 20 next starts prediction processing of disconnection of the current communication channel to the upstream network (step S12). For example, the terminal device 20 starts processing of predicting whether communication with the upstream network using the current communication channel will be disconnected after a lapse of a predetermined time. Here, the predetermined time may be a time set in advance in the terminal device 20 and the terminal device 30 and shared by the terminal device 20 and the terminal device 30. Furthermore, the predetermined time may be a time designated by the terminal device 30 to the terminal device 20 in the initial setup.

In a case where the prediction is no disconnection (step S13: No), the terminal device 20 continues the prediction processing until disconnection prediction is made. In a case where it is predicted that the communication channel will be disconnected after a lapse of the predetermined time (step S13: Yes), the terminal device 20 notifies the terminal device 30 of information regarding the current communication channel (step S14A). An example of the information regarding the communication channel is information predicting that communication with the upstream network using the current communication channel will be disconnected after a lapse of a predetermined time. In the following description, notification of disconnection prediction by the terminal device 20 may be referred to as disconnection notice.

Moving to the flow on the client device side, the terminal device 30 makes a discrimination as to whether a disconnection notice has been received from the terminal device 20 (step S14B). When not having received the disconnection notice (step S14B: No), the terminal device 30 repeats step S14B until the disconnection notice is received.

When having received the disconnection notice (step S14B: Yes), the terminal device 30 starts handover processing (step S15). Here, the handover processing is processing for changing the current bearer via the terminal device 20 to a new bearer.

For example, the terminal device 30 presents a requirement to the terminal device 20 to switch the communication channel connected to the upstream network. When the upstream network is regarded as one communication channel, the terminal device 30 may present a requirement to the terminal device 20 to switch the upstream network (step S16A). For example, when the current upstream network is network N1, the terminal device 30 presents a requirement to the terminal device 20 to switch the upstream network to network N2. Alternatively, the terminal device 30 may unquestionably present a requirement to switch the communication channel from the radio access network of cellular communication to Wi-Fi or from Wi-Fi to the radio access network of cellular communication. It is also possible to regard the upstream network as a radio access network of cellular communication or Wi-Fi.

When having received the disconnection notice, the terminal device 30 may perform processing related to a predetermined function. The predetermined function may be application processing performed by the application processing unit 331, for example. In this case, the terminal device 30 may perform application stop processing as processing related to a predetermined function. By performing the application stop processing before disconnection, it is possible to prevent occurrence of errors in the execution of the application.

Furthermore, the terminal device 30 may perform, as processing related to a predetermined function, processing of switching the upstream network currently used by the application processing unit 331 to another upstream network. For example, the terminal device 30 may present a requirement to the terminal device 20 to switch the upstream network (for example, network N1) currently used by the application processing unit 331 to another upstream network (for example, network N2). By switching the upstream network before disconnection, it is possible to prevent an occurrence of errors in the execution of the application.

Moving to the flow on the host device, the terminal device 20 makes a discrimination as to whether a requirement has been received from the terminal device 30 (step S16B). For example, the terminal device 20 makes a discrimination as to whether a requirement of switching the upstream network has been received from the terminal device 30. In a case where the requirement has not been received from the terminal device 30 (step S16B: No), the terminal device 20 repeats step 16B until the requirement is received from the terminal device 30. In a case where the requirement has been received from the terminal device 30 (step S16B: Yes), the terminal device 20 executes processing related to the requirement. For example, when the requirement received from the terminal device 30 is the upstream network switching requirement, the terminal device 20 executes upstream network switching processing (step S17) .

Thereafter, the terminal device 20 and the terminal device 30 repeat the processing after the initial setup (steps S12 to S17).

According to the present processing example, the terminal device 30 receives, in advance, the information related to disconnection of the communication channel before disconnection, making it possible for the terminal device 30 to stop the application and perform processing such as handover before disconnection. As a result, the terminal device 30 can perform communication using the connection, which may be a connection to the upstream network via the terminal device 20, with high reliably.

### <<4. Second processing example (prediction of quality of communication channel connected to upstream network)>>

Next, a second implementation example will be described. The second processing example is a processing example of a case where the terminal device 20 (host device) predicts the quality of the current communication channel to the upstream network. The terminal device 20 (host device) is connected to the upstream network through one of a plurality of communication channels. The terminal device 20 (host device) predicts the quality of the communication channel and notifies the terminal device 30 (client device) of a result of the prediction.

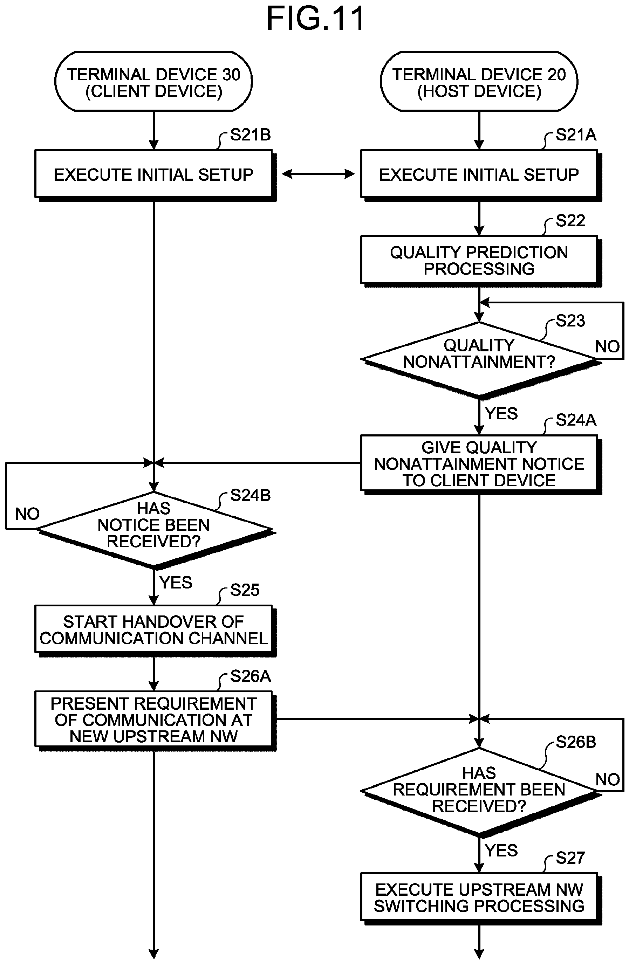

FIG. 11 is a flowchart illustrating a second processing example (quality prediction of a communication channel connected to an upstream network). Hereinafter, the second processing example will be described with reference to FIG. 11.

First, the terminal device 20 and the terminal device 30 execute initial setup (steps S21A and S21B). The initial setup is processing for the terminal device 20 and the terminal device 30 to create a control path. In the second processing example, the control path is processing for creating a path for exchanging various types of information related to the quality prediction of the communication channel. Note that the control path between the terminal device 20 (host device) and the terminal device 30 (client device) may be created when a network has been formed between the host device and the client device. Furthermore, in a case where the function related to the present prediction notification is enabled after the normal tethering function is enabled, the control path may be created at that time. There is no need to use a large volume of communication for this control path. On the other hand, a highly reliable communication channel is required. Therefore, it is desirable to use a stable bearer (for example, a wired LAN) different from the bearer (for example, a wireless LAN) used for data transfer between the host device and the client device.

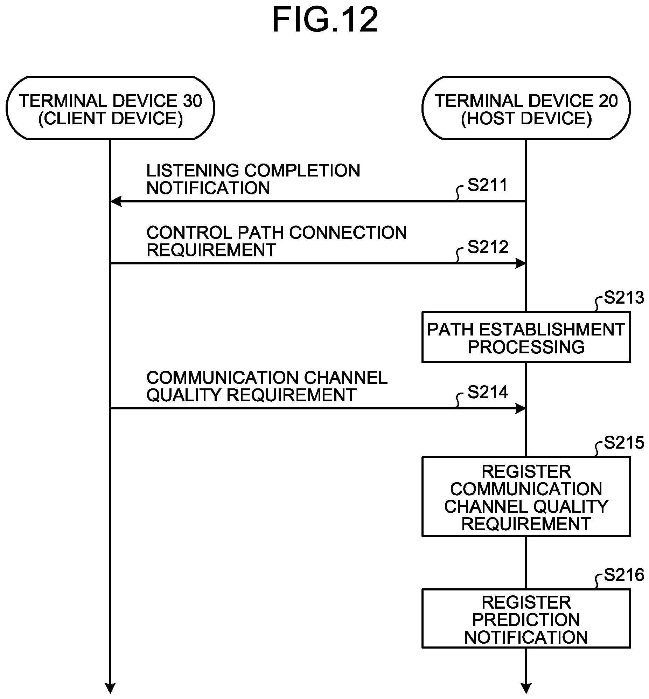

FIG. 12 is a sequence diagram illustrating initial setup. First, in order to enable communication between the host device and the client device, the terminal device 30 (client device) opens a listening port. The terminal device 20 (host device) transmits a listening completion notification to the opened port using the control path (step S111). Having received the listening completion notification from the terminal device 20, the terminal device 30 transmits a control path connection requirement to the terminal device 20 (step S112). The terminal device 20 that has received the control path connection requirement performs control path establishment processing.

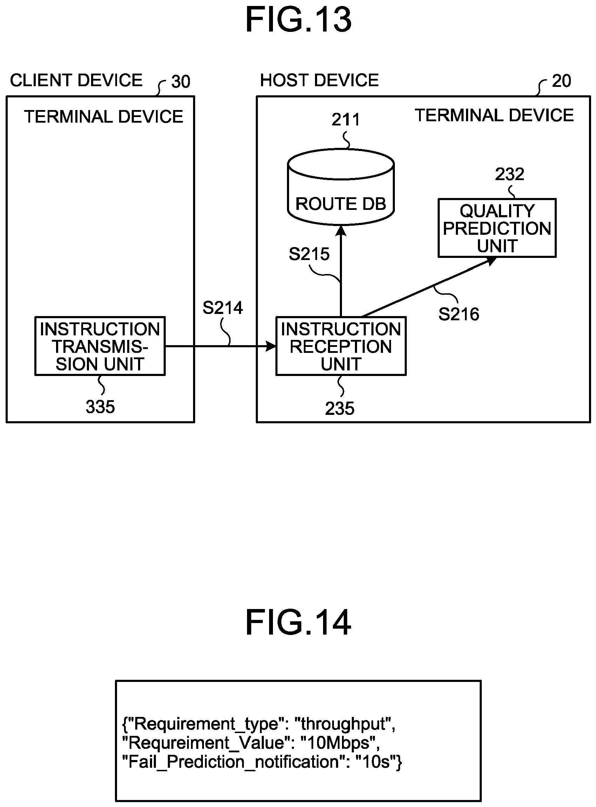

FIG. 13 is a functional block diagram illustrating initial setup. After the establishment of the control path, the instruction transmission unit 335 of the terminal device 30 uses the control path to transmit, to the terminal device 20, information indicating notification criteria for the information related to the current communication channel of the upstream network. For example, the instruction transmission unit 335 of the terminal device 30 may transmit, to the terminal device 20, information indicating required quality, which is information regarding the quality of the communication channel presented as a quality requirement from another communication device, as the information indicating notification criteria (step S214). Examples of the information indicating required quality include information indicating a minimum desirable throughput of 10 Mbps, information indicating a response from a specific host to be made within 100 ms, and/or information indicating a packet loss rate to be less than 0.1%.

In addition, the information indicating notification criteria may include information indicating designated time in addition to the information indicating required quality. The information indicating designated time is information for designating the time to take before the terminal device 20 notifies the terminal device 30 when the quality of the communication channel is predicted to stop satisfying the required quality. For example, by using the information indicating designated time, the terminal device 30 designates a desired time to receive a notification from the terminal device 20, such as 10 seconds before the timing at which the quality stops satisfying the required quality, for example.

The information indicating notification criteria may be provided in any file format. For example, the information indicating notification criteria may be described in a JSON format, a YAML format, or a protobuf format. For example, the information indicating notification criteria may be described in a file format as illustrated in FIG. 14. FIG. 14 is a diagram illustrating a file format of information indicating notification criteria.

Note that the notification criteria can be set for each application or for each flow. For example, when there is a plurality of applications operating in the terminal device 30 and there is a plurality of communication channel requirement characteristics, the required quality is set for each application in order to achieve each communication channel characteristic. In this case, the application (or flow) may be made identifiable by adding a descriptor (for example, "port": "23") identifying the port number to the notification criteria illustrated in FIG. 14.

Subsequently, the terminal device 20 registers the information indicating notification criteria transmitted from the terminal device 30 (steps S215 and S216). Specifically, the instruction reception unit 235 of the terminal device 20 registers the information indicating required quality included in the information indicating notification criteria into the route database 211 (step S215). For example, the instruction reception unit 235 analyzes the information indicating required quality transmitted from the terminal device 30. Subsequently, the instruction reception unit 235 writes routing rules in the route database 211 based on a result of the analysis. For example, when the information indicating required quality is information indicating a requirement of a minimum throughput of 10 Mbps, setting is performed such that a communication channel that satisfies the required quality (for example, a radio access network of cellular communication) is to be a communication channel connected to the upstream network.

At this time, the communication channel to be set may be a default route of the host device itself (the terminal device 30 itself). However, in the case of a bearer with a default route having a possibility of not satisfying the condition (for example, in the case of a bearer with an expected throughput varying depending on a congestion situation such as Wi-Fi), the terminal device 20 may set a bearer expected to have a constant throughput, as a communication channel without using the default route. Furthermore, in a case where the required quality is set for each application or for each flow, the terminal device 20 may define a route for each application or for each flow. Although examples of an implementation method for this include an SDN protocol such as OpenFlow, the terminal device 20 may use other methods. For example, the terminal device 20 may set up a virtual router and write a routing rule in each virtual router.

In addition, the instruction reception unit 235 of the terminal device 20 registers information related to the notification of the quality prediction (information indicating notification criteria) into the quality prediction unit 232. More specifically, the instruction reception unit 235 registers the information indicating required quality and the information indicating designated time included in the information indicating notification criteria into the quality prediction unit 232 (step S216). When an event satisfying the registered notification criteria occurs (that is, at the time of communication channel quality nonattainment), the quality prediction unit 232 notifies the prediction notification unit 234 of the event. The processing of the quality prediction unit 232 will be described in detail below.

Subsequently, the terminal device 20 starts prediction processing of the quality of the current communication channel to the upstream network (step S22). For example, the quality prediction unit 232 of the terminal device 20 predicts the communication channel quality using the communication parameter of the upstream network as well as information from the sensor unit 24 or an external sensor.

At this time, the quality prediction unit 232 may predict that a predetermined parameter (for example, throughput, delay, and packet loss rate) representing the communication channel quality exceeds a predetermined threshold. Further, the quality prediction unit 232 may predict that the bearer becomes unavailable (such as disconnection of Wi-Fi connection from an access point, or cellular communication failure, for example). In addition, it is also allowable to perform labeling of switching not only in a case where there is a failure in the communication device/communication channel as described above, but also in a state of deterioration of user eXperience (UX). Assumable cases of the UX deterioration event include the following (1) to (4).
(1) Case of stagnation of progress bar in the browser or display of an icon indicating data loading
(2) Case of data loading failure and display of error in the browser
(3) Case where video streaming encounters situations such as interruption or suspension of the video image, error occurrence, or display of icon indicating data loading
(4) Case of screen loading failure in an application and display of an error message

In addition, the terminal device 20 may detect discomfort (that is, deterioration of UX) with the communication quality of the user by combining a plurality of sensors (for example, in-camera, depth sensor, and 3D sensor) mounted on the terminal device 20 or the terminal device 30. Furthermore, the terminal device 20 may detect discomfort with the communication quality of the user by detecting an operation performed by the user when feeling discomfort. Assumable operations performed by the user when feeling discomfort include a user's operation of pressing a predetermined button, a predetermined icon, or a predetermined hardware button displayed on the screen of the terminal device 30, and a user's operation of shaking the terminal device 30 in a predetermined pattern.

The quality prediction unit 232 may predict the communication channel quality using machine learning or may predict the communication channel quality using a model represented by a linear formula.

### (Quality prediction using machine learning)

When predicting the communication channel quality using machine learning, the quality prediction unit 232 may include a trained model that predicts the quality of the communication channel.

The trained model may be a neural network model obtained by machine learning (including deep learning.). The neural network model includes a plurality of layers referred to as an input layer, a hidden layer (also referred to as an intermediate layer), and an output layer. Each of the plurality of layers includes one or a plurality of nodes. The nodes, provided in plurality, are connected to each other via edges. Each layer has a function referred to as an activation function, and each edge is weighted.

The neural network model may be a model in a form referred to as a convolution neural network (CNN), a recurrent neural network (RNN), or long short-term memory (LSTM), for example. Needless to say, the neural network model is not limited to these models.

Note that the trained model may include a plurality of neural network models. For example, the trained model may include a plurality of neural network models selected from CNN, RNN, and LSTM, for example. In a case where the trained model includes a plurality of neural network models, the plurality of neural network models are processed in a dependent manner or in parallel.

The trained model is not limited to a model based on deep learning. For example, the trained model may be a model based on reinforcement learning. In reinforcement learning, the model is trained through trial and error to take an action (setting) that maximizes value.

The information processing device (hereinafter, referred to as a training device) that performs training may be the terminal device 30 or another device (for example, the server device 10 or the terminal device 30). For example, the training device may assign a ground truth label (1, for example) to a location where an object to be predicted (for example, a throughput becomes n Mbps or less) occurs and assign 0 to the other locations to perform training with time series data to generate a predictor (trained model). In this case, the training device can generate a predictor (trained model) that predicts n seconds before occurrence of an event by assigning ground truth label 1 to n seconds before occurrence of the event.

Assumable parameters to be used for the training are the following parameters (1) to (3). The parameters to be used for the training (hereinafter, referred to as training parameters) may be all or some of the parameters below.

### (1) Wi-Fi parameters

The assumable parameters to be used for the training can include Wi-Fi parameters. Specific examples of Wi-Fi parameters will be listed below.

PHY protocol type (a/b/g/n/ac/ax), MAC protocol type (d/e/h/i/j/k/p/v/w/y/z), signal strength (Received Signal Strength Indicator (RSSI)), used frequency, service set identifier (SSID), Basic Service Set Identifier (BSSID), allocated bandwidth, RTT of radio section with respect to access point, S/N ratio, frequency spectrum, number of terminals in the same basic service set (BSS), authentication method, number of Multi Input Multi Output (MIMO) layers, number of signal collisions, number of Request To Send/Clear To Send (RTS/CTS) per unit time, number of probe requirements, number of beacons received, number of reception/transmission packet counters, number of successful transmissions, number of successful receptions, number of repetition of transmission, number of frame failures, and number of interface errors.

### (2) Cellular communication Parameters

The assumable parameters to be used for the training can include cellular communication parameters. Specific examples of cellular communication parameters will be listed below.

Number of component carriers, average rate (Modulation and Coding Scheme (MCS)), capability (LTE/HSPA +/GSM (registered trademark)), signal strength, number of MIMO layers, number of communication allocation time, number of actual resource blocks, reception/transmission packet counter value, number of successful transmissions, number of successful receptions, number of frame retransmissions (MAC), number of Radio Link Control (RLC), number of interface errors, throughput (PHY/IP), cell information (cell ID, transmission power of downlink reference signal, adjacent cell information, accommodating capacity of cell, and backbone band information), subscription plan, subscription communication capacity, remaining communication capacity, and speed limit adaptation status

### (3) Sensor parameters

The assumable parameters to be used for the training can include sensor parameters. Specific examples of sensor parameters will be listed below.
· Sensor information usable to estimate a user's position and movement speed, such as acceleration, magnetism, direction, atmospheric pressure, and position sensors.
· Sensor information usable to infer user's behavior, such as acceleration, time, direction, atmospheric pressure, position, and the number of steps, or behavioral information inferred from the sensor information (transportation means such as walk, train, or vehicle, up/down movement using stairway or using elevator, etc.)
· Camera, blood pressure information, and application information necessary to measure user's situation, types, user's sense of immersion, stress, and the like

### (Specific operation example of quality prediction using machine learning)

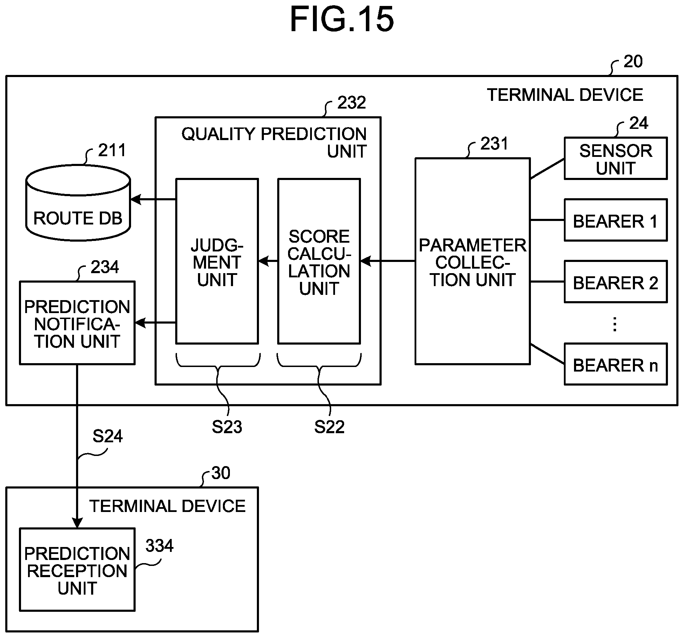

FIG. 15 is a functional block diagram illustrating quality prediction using machine learning. Hereinafter, a specific operation example of quality prediction using machine learning will be described.

The quality prediction unit 232 of the terminal device 20 includes a score calculation unit and a judgment unit. The score calculation unit includes a trained model trained by the above-described training parameters. The score calculation unit is configured to output the score of the communication channel quality of each of a plurality of bearers. Each of the plurality of bearers corresponds to a communication channel usable by the terminal device 30. The quality prediction unit 232 inputs the parameters collected by the parameter collection unit 231 to the score calculation unit. The quality prediction unit 232 calculates the quality score of each bearer using the trained model.

Note that the quality prediction unit 232 may be configured to use data detected by the sensor as input data to the score calculation unit. In the example of FIG. 15, the quality prediction unit 232 is configured to use data detected by the sensor unit 24 of the terminal device 20 as an input to the score calculation unit. Alternatively, the quality prediction unit 232 may be configured to use data detected by an external sensor (for example, a sensor included in the terminal device 30) as the input. For example, the quality prediction unit 232 may be configured to use acceleration information detected by the acceleration sensor of the terminal device 30 as input data to the score calculation unit. Alternatively, the quality prediction unit 232 may be configured to use a change amount per unit time in the position information detected by the position sensor (for example, a GPS sensor) of the terminal device 30 as input data to the score calculation unit. With this configuration, the quality prediction unit 232 can predict how soon (in seconds) Wi-Fi performance will deteriorate based on the moving speed and the acceleration state of the user.

Note that the value of the sensor may be used as an input parameter of the neural network, or may be used for other purposes. For example, when an elevator is used, it is expected to have environment deterioration in both cellular communication (LTE/NR) and Wi-Fi. In this case, the terminal device 20 may notify the terminal device 20 that stable communication cannot be performed using any bearer.

Furthermore, the sensor may be a sensor mounted inside the terminal device 20 or an external sensor (for example, a sensor mounted on the terminal device 20 or another device). For example, the sensor may be a sensor mounted on a device that can be used as an activity tracker. Assumable devices applicable as the activity tracker include a device worn by the user when used, such as a smartwatch and a step counter. In this case, the terminal device 20 can grasp the state of the user used for prediction with higher accuracy using information such as pulse information, the number of steps, and acceleration. It is also conceivable to estimate the stress state of the user from the value of the sensor and change the switching characteristic according to the stress state. For example, the switching threshold may be adjusted such that a faster bearer is highly likely to be selected when the user is irritated.

These external sensors are connected to the terminal device 20 via an I/O unit (for example, the communication unit 22). Examples of interfaces used for connection include universal serial bus (USB) and Bluetooth (registered trademark), but the connection may be made via other type of interfaces. In addition, a plurality of these predictors (trained models) may be mounted for each event to be predicted.

Subsequently, the terminal device 20 makes a discrimination as to whether the current communication channel turns to a quality nonattainment state after a lapse of a designated time. That is, the terminal device 20 determines whether the current quality of the communication channel stops attaining the required quality of the terminal device 30 after a lapse of the time designated by the terminal device 30 (step S23). Here, the terminal device 20 may make a discrimination as follows.

For example, the quality prediction unit 232 of the terminal device 20 is assumed to include a score calculation unit and a judgment unit as illustrated in FIG. 15. In addition, the score calculation unit is assumed to output a score indicating the communication channel quality of each bearer. Each bearer corresponds to each communication channel usable by the terminal device 20. In this case, the judgment unit compares the score of the current bearer among the plurality of scores output by the score calculation unit with the threshold set in the terminal device 30. The judgment unit may perform discrimination as to whether the current quality of the communication channel will not attain the required quality after a lapse of a designated time based on whether the score exceeds the threshold.

The discrimination target of the judgment unit does not necessarily have to be "whether the quality of the current communication channel will not attain the required quality after a lapse of a designated time". For example, in a case where the terminal device 30 has the required quality with a margin in advance, the discrimination target of the judgment unit may be "whether the quality of the current communication channel has not attained the required quality at present".

Note that the threshold varies depending on the information indicating required quality notified from the terminal device 20. For example, it is assumed that the information indicating required quality from the terminal device 30 is information designating the throughput (for example, information indicating that a notification is given in a case where throughput is 10 Mbps or less). It is also assumed that the prediction target of the predictor (trained model) is the same as the target related to the required quality of the terminal device 30. For example, it is assumed that the prediction target of the predictor (trained model) is prediction of throughput of 10 Mbps or less, and the required quality of the terminal device 30 is the throughput of 10 Mbps or less. In this case, the judgment unit sets the threshold as a default threshold (for example, 0.5).

Note that, in a case where the prediction target of the predictor (trained model) and the required quality of the terminal device 30 do not match, the threshold may be determined according to their ratio. For example, when the prediction target of the predictor (trained model) is prediction of the throughput of 10 Mbps or less and the required quality of the terminal device 30 is the throughput of 20 Mbps, the judgment unit may set 0.25 (= 0.5 (being default threshold) × 10 Mbps (value used for original prediction target)/20 Mbps (required quality of terminal device 30)) as the threshold. Needless to say, the discrimination unit may determine the threshold by another method. For example, the discrimination unit may use, as the threshold, a value examined and determined by the developer of the terminal device 20 or the terminal device 20 to be the corresponding value.

In a case where the prediction is that nonattainment of quality will not occur (step S23: No), the terminal device 20 continues the prediction processing until quality nonattainment is predicted. When it is predicted that quality nonattainment will occur after a lapse of the designated time (step S23: Yes), the prediction notification unit 234 of the terminal device 20 notifies the terminal device 30 of information related to the current communication channel at the timing when the prediction is made (step S24A). The information related to the communication channel may be information for giving the terminal device 30 a communication channel quality nonattainment notice (hereinafter, referred to as a quality nonattainment notice), for example. Note that, in a case where the discrimination target of the judgment unit is "whether the quality of the current communication channel has not attained the required quality at present", the "timing at which prediction has been made" is a timing at which the quality of the communication channel stop satisfying the required quality. When the quality nonattainment communication channel is the communication channel related to the control path, the information related to the current communication channel may include information indicating that the communication channel related to the control path is to be changed.

Moving to the flow on the client device side, the prediction reception unit 334 of the terminal device 30 makes a discrimination as to whether a quality nonattainment notice has been received from the terminal device 20 (step S24B). When the quality nonattainment notice has not been received (step S24B: No), the prediction reception unit 334 repeats step S24B until the quality nonattainment notice is received.

When the quality nonattainment notice has been received (step S24B: Yes), the terminal device 30 starts handover processing (step S25). Here, the handover processing is processing for changing the current bearer via the terminal device 20 to a new bearer.

For example, the terminal device 30 presents a requirement to the terminal device 20 to switch the communication channel connected to the upstream network. When the upstream network is regarded as one communication channel, the terminal device 30 may present a requirement to the terminal device 20 to switch the upstream network (step S26A). When the current upstream network is network N1, the terminal device 30 presents a requirement to the terminal device 20 to switch the upstream network to network N2. Alternatively, the terminal device 30 may unquestionably present a requirement to switch the communication channel from the radio access network of cellular communication to Wi-Fi or from Wi-Fi to the radio access network of cellular communication. It is also possible to regard the upstream network as a radio access network of cellular communication or Wi-Fi.

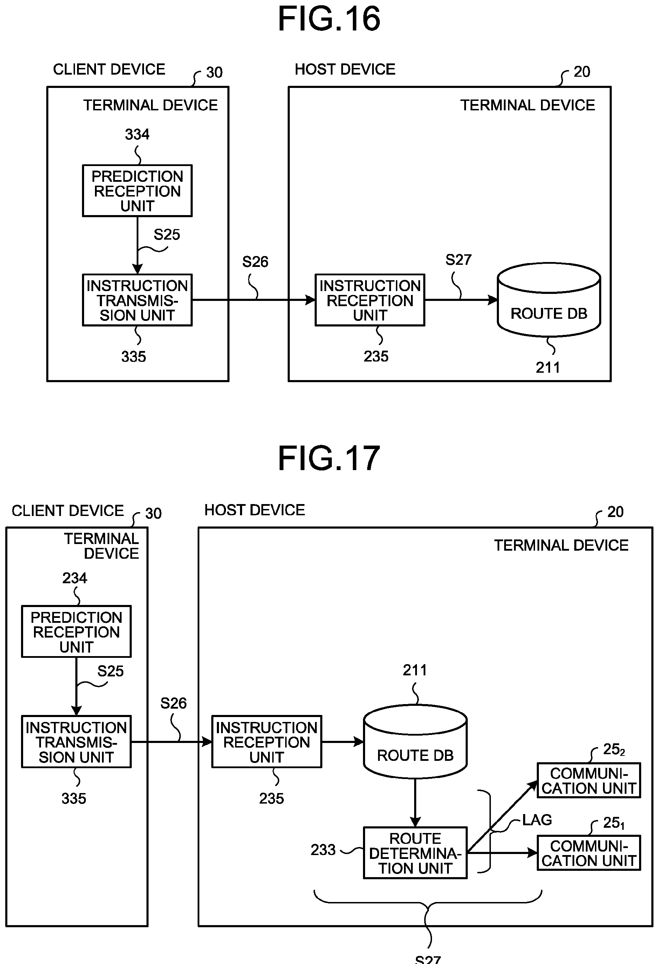

FIG. 16 is a functional block diagram illustrating an operation of a terminal device 30 (client device) at the time of communication channel quality nonattainment. For example, the instruction transmission unit 335 of the terminal device 30 designates a specific flow to be switched and designates on the terminal device 20 which bearer to be switched to (step S25). The file format of the notification related to the designation may be in any format. For example, the notification indicating this designation may be described in a JSON format, a YAML format, or a protobuf format.

Note that the terminal device 30 may perform processing related to a predetermined function when having received the quality nonattainment notice. The predetermined function may be application processing performed by the application processing unit 331, for example. In this case, the terminal device 30 may perform application stop processing as processing related to a predetermined function. By performing the application stop processing before disconnection, it is possible to prevent occurrence of errors in the execution of the application.

Furthermore, the terminal device 30 may perform, as processing related to a predetermined function, processing of switching the upstream network currently used by the application processing unit 331 to another upstream network. For example, the terminal device 30 may present a requirement to the terminal device 20 to switch the upstream network (for example, network N1) currently used by the application processing unit 331 to another upstream network (for example, network N2). By switching the upstream network before disconnection, it is possible to prevent an occurrence of errors in the execution of the application.

Moving to the flow on the host device, the terminal device 20 makes a discrimination as to whether a requirement has been received from the terminal device 30 (step S26B). For example, the instruction reception unit 235 of the terminal device 20 makes a discrimination as to whether a requirement related to the switching of the communication channel has been received from the terminal device 30. The requirement related to the switching of the communication channel may include a requirement related to the quality of the communication channel. The requirement related to the quality of the communication channel may include information indicating the quality to be satisfied by the switched communication channel.

In a case where the requirement has not been received from the terminal device 30 (step S26B: No), the terminal device 20 repeats step 26B until the requirement is received from the terminal device 30. In a case where the requirement has been received from the terminal device 30 (step S26B: Yes), the terminal device 20 executes processing related to the requirement. For example, when the requirement received from the terminal device 30 is a communication channel switching requirement, the terminal device 20 executes communication channel switching processing (step S27). For example, the instruction reception unit 235 of the terminal device 20 writes route information related to switching into the route database 211 in response to the instruction. For example, when the requirement related to the switching of the communication channel includes the requirement related to the quality of the communication channel, the instruction reception unit 235 writes the information indicating the communication channel of the quality satisfying the requirement into the route database 211. The terminal device 20 switches the communication channel on the basis of the route information written in the route database 211. With this configuration, the terminal device 20 switches the current communication channel to another communication channel that satisfies the required quality of the terminal device 30.

The communication channel switching processing performed by the terminal device 20 may include processing of switching the connection using one communication function to the connection bundling a plurality of communication functions. FIG. 17 is a functional block diagram illustrating an operation of a terminal device 30 (client device) at the time of communication channel quality nonattainment. For example, in a case where the required quality cannot be satisfied by using any one of a plurality of communication channels, the route determination unit 233 of the terminal device 20 may switch the access to the upstream network using one communication channel to the access using a link aggregation group (LAG) obtained by bundling a plurality of communication channels. By using the LAG, communication can be made more stable.

Meanwhile, there can be a case where the communication channel quality cannot be satisfied even with a new bearer. In this case, the terminal device 30 may adjust the use band of the application being used.

In addition, for safe termination of a flow, the terminal device 30 may initiate signaling with a communication partner server to inherit an ID of an existing flow and create a new flow so as to initiate communication from another communication channel in a higher layer (QUIC). The terminal device 30 may apply multipath using a plurality of bearers (multipath TCP). In addition, the terminal device 30 may be set to enable bypass route control using a redundancy technology (such as VRRP, OSPF, or BGP) in L3 at the time of disconnection of communication. Moreover, the terminal device 30 may present a requirement to use a redundancy technology (such as link aggregation) in L2. In the application layer, the tethering client device may temporarily suspend an operating flow, enable communication from the middle, or close an existing flow socket. In this manner, various termination options are conceivable.

Furthermore, in a case where there is a bearer other than the bearer related to tethering, the terminal device 30 may connect to the upstream network using a bearer different from the bearer related to tethering.

Thereafter, the terminal device 20 and the terminal device 30 repeat the processing after the initial setup (steps S22 to S27).

According to the present processing example, the terminal device 30 receives, in advance, the information related to communication channel quality before deterioration of the communication channel, making it possible for the terminal device 30 to stop the application and perform processing such as handover before deterioration of communication channel quality. As a result, the terminal device 30 can perform communication using the connection, which may be a connection to the upstream network via the terminal device 20, with high reliably.

### <<5. Modification>>

The above-described embodiment is an example, and various modifications and applications are possible.

For example, in the above-described embodiment (first processing example), the terminal device 20 (host device) performs prediction regarding disconnection of the communication channel connected to the upstream network, but may perform prediction regarding disconnection of the communication channel between the terminal device 20 (host device) and the terminal device 30 (client device) (that is, the downstream network). When having found a future possibility of disconnection within n seconds of the disconnection, the terminal device 20 (host device) may notify the terminal device 30 (client device) of the disconnection as a disconnection notice. Having received this notification, the terminal device 30 (client device) may presume an interruption of the flow in communication and attempt to perform safe termination of the flow and handover to a new bearer.

Furthermore, in the above-described embodiment (second processing example), the terminal device 20 (host device) performs prediction regarding quality of the communication channel connected to the upstream network, but may perform prediction regarding the quality of the communication channel between the terminal device 20 (host device) and the terminal device 30 (client device) (that is, the downstream network). When having found a future possibility that the required quality is not to be satisfied within n seconds, the terminal device 20 may notify the terminal device 30 of the nonattainment as a quality nonattainment notice. Having received this notification, the terminal device 30 may presume an interruption of the flow in communication and attempt to perform safe termination of the flow and handover to a new bearer.

The control device that controls the server device 10, the terminal device 20, and the terminal device 30 of the present embodiment may be actualized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the configuration of the control device. At this time, the control device may be a device (for example, a personal computer) outside the server device 10, the terminal device 20 and the terminal device 30. Furthermore, the control device may be a device (for example, the control unit 13, the control unit 23, and the control unit 33) inside the server device 10, the terminal device 20, or the terminal device 30, respectively.

Furthermore, the communication program may be stored in a disk device included in a server device on a network such as the Internet so as to be able to be downloaded to a computer, for example. Furthermore, the functions described above may be implemented by using operating system (OS) and application software in cooperation. In this case, the sections other than the OS may be stored in a medium for distribution, or the sections other than the OS may be stored in a server device so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be arbitrarily altered unless otherwise specified. For example, a variety of information illustrated in each of the drawings are not limited to the information illustrated.

In addition, each of components of each device is provided as a functional and conceptional illustration and thus does not necessarily need to be physically configured as illustrated. That is, the specific form of distribution/integration of each of the devices is not limited to those illustrated in the drawings, and all or a part thereof may be functionally or physically distributed or integrated into arbitrary units according to various loads and use situations. This configuration by distribution and integration may be performed dynamically.

Furthermore, the above-described embodiments can be appropriately combined within a range implementable without contradiction of processing. Furthermore, the order of individual steps illustrated in the flowcharts of the above-described embodiment can be changed as appropriate.

Furthermore, for example, the present embodiment can be implemented as any configuration constituting a device or a system, for example, a processor as a large scale integration (LSI) or the like, a module using a plurality of processors or the like, a unit using a plurality of modules or the like, and a set obtained by further adding other functions to the unit, or the like (that is, a configuration of a part of the device).

In the present embodiment, a system represents a set of a plurality of components (devices, modules (components), or the like), and whether all the components are in the same housing would not be a big issue. Therefore, a plurality of devices housed in separate housings and connected via a network, and one device in which a plurality of modules are housed in one housing, are both systems.

Furthermore, for example, the present embodiment can adopt a configuration of cloud computing in which one function is cooperatively shared and processed by a plurality of devices via a network.

### <<6. Conclusion>>

As described above, according to an embodiment of the present disclosure, the terminal device 20 (host device) gives a notice of communication disconnection to the terminal device 30 (client device) when communication disconnection or deterioration in communication channel quality is predicted. This makes it possible for the terminal device 30 to perform handover beforehand or safe termination of the flow. This makes it possible for the terminal device 30 to prevent a situation in which the flow ends unintentionally which causes an error occurs in the application operation, or a situation in which the next communication channel cannot be established due to the socket left open. In addition, any of communication channels is established at any time with higher probability, enabling establishment of highly reliable communication.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technique can also have the following configurations.
(1)
   A communication device having a plurality of communication functions of connecting to an upstream network using different communication channels individually, the communication device comprising:
   a communication control unit that controls communication with another communication device connected to the upstream network via the communication device; and
   a notification unit that notifies, before switching the communication channel, the another communication device of information related to the communication channel for the switching of the communication channel.
(2) The communication device according to (1),
   wherein the communication control unit receives information indicating a notification criteria for the information related to the communication channel from the another communication device, and
   the notification unit notifies the another communication device of the information related to the communication channel based on the notification criteria.
(3) The communication device according to (2),
   wherein the information indicating notification criteria includes information indicating required quality which is a quality of the communication channel presented as a quality requirement from the another communication device, and
   the notification unit notifies the another communication device of the information related to the communication channel based on the information indicating required quality.
(4) The communication device according to (3),
   wherein the notification unit notifies the another communication device of the information related to the communication channel at a timing when a quality of the communication channel stop satisfying the required quality.
(5) The communication device according to (3),
   wherein the information indicating notification criteria includes information indicating a designated time which is a time designated by the another communication device in addition to the information indicating required quality, and
   the notification unit notifies the another communication device of the information related to the communication channel at a timing at which the quality of the communication channel is predicted to stop satisfying the required quality after a lapse of the designated time.
(6) The communication device according to any one of (1) to (5), comprising:
   a prediction unit that performs prediction related to the communication channel,
   wherein the notification unit notifies the another communication device of the information related to the communication channel based on a prediction result obtained by the prediction unit.
(7) The communication device according to (6),
   wherein the prediction unit predicts that the communication with the upstream network using the communication channel being currently used will be disconnected after a lapse of a predetermined time, and
   the notification unit notifies, in a case where the disconnection is predicted, the another communication device of the information related to the communication channel.
(8) The communication device according to any one of (1) to (7),
   wherein the communication control unit performs operations comprising:
   receiving a requirement related to switching of the communication channel from the another communication device to which the information related to the communication channel has been notified; and
   performing control related to the switching of the communication channel based on the requirement from the another communication device.
(9) The communication device according to (8),
   wherein the requirement related to the switching of the communication channel includes a requirement related to quality of the communication channel, and
   when having received the requirement from the another communication device, the communication control unit switches the communication channel to a communication channel of a quality satisfying the requirement.
(10) The communication device according to (8) or (9),
   wherein the control related to the switching of the communication channel includes control of switching a connection using one of the communication functions to a connection bundling a plurality of the communication functions.
(11) A communication device connectable to an upstream network via another communication device having a plurality of communication functions to connect to the upstream network using different communication channels individually, the communication device comprising:
   a reception unit that receives, before switching of the communication channel, information related to the communication channel for the switching of the communication channel from the another communication device; and
   a processing unit that performs processing related to a predetermined function that uses the upstream network based on the information related to the communication channel.
(12) The communication device according to (11),
   wherein the information related to the communication channel includes information predicting that the communication with the upstream network using the communication channel being currently used will be disconnected after a lapse of a predetermined time, and
   when having acquired the information predicting the disconnection, the processing unit performs processing related to the predetermined function.
(13) The communication device according to (12),
   wherein, when having acquired the information predicting the disconnection, the processing unit performs stop processing of the predetermined function.
(14) The communication device according to (12),
   wherein, when having acquired the information predicting the disconnection, the processing unit performs processing of switching the upstream network currently used by the predetermined function to the upstream network different from the currently used upstream network.
(15) The communication device according to any one of (11) to (14), comprising:
   an instruction unit that transmits a requirement related to the switching of the communication channel to the another communication device.
(16) The communication device according to (15),
   wherein the information related to the communication channel includes information related to the quality of the communication channel, and
   the instruction unit presents a requirement related to the switching of the communication channel based on the information related to the quality of the communication channel.
(17) A communication method executed by a communication device having a plurality of communication functions of connecting to an upstream network using different communication channels individually, the communication method comprising:
   controlling communication with another communication device connected to the upstream network via the communication device; and
   notifies, before switching the communication channel, the another communication device of information related to the communication channel for the switching of the communication channel.
(18) A communication method executed by a communication device connectable to an upstream network via another communication device having a plurality of communication functions to connect to the upstream network using different communication channels individually, the communication method comprising:
   acquiring, before switching of the communication channel, information related to the communication channel for the switching of the communication channel from the another communication device; and
   performing processing related to a predetermined function that uses the upstream network based on the information related to the communication channel.
(19) A program for causing a communication device, which has a plurality of communication functions of connecting to an upstream network using different communication channels individually, to function as components comprising:
   a communication control unit that controls communication with another communication device connected to the upstream network via the communication device; and
   a notification unit that notifies, before switching the communication channel, the another communication device of information related to the communication channel for the switching of the communication channel.
(20) A program for causing a communication device, which is connectable to an upstream network via another communication device having a plurality of communication functions to connect to the upstream network using different communication channels individually, to function as components comprising:
   an acquisition unit that acquires, before switching of the communication channel, information related to the communication channel for the switching of the communication channel from the another communication device; and
   a processing unit that performs processing related to a predetermined function that uses the upstream network based on the information related to the communication channel.

### Reference Signs List

1 COMMUNICATION SYSTEM
10 SERVER DEVICE
20, 30 TERMINAL DEVICE
11, 21, 31 STORAGE UNIT
12, 22, 25, 32 COMMUNICATION UNIT
13, 23, 33 CONTROL UNIT
24 SENSOR UNIT
211, 311 ROUTE DATABASE
231 PARAMETER COLLECTION UNIT
232 QUALITY PREDICTION UNIT
233 ROUTE DETERMINATION UNIT
234 PREDICTION NOTIFICATION UNIT
235 INSTRUCTION RECEPTION UNIT
331 APPLICATION PROCESSING UNIT
332 SESSION MANAGEMENT UNIT
333 ROUTE DETERMINATION UNIT
334 PREDICTION RECEPTION UNIT
335 INSTRUCTION TRANSMISSION UNIT
N1, N2 NETWORK

## Claims

1. A communication device having a plurality of communication functions of connecting to an upstream network using different communication channels individually, the communication device comprising:
a communication control unit that controls communication with another communication device connected to the upstream network via the communication device; and
a notification unit that notifies, before switching the communication channel, the another communication device of information related to the communication channel for the switching of the communication channel.

2. The communication device according to claim 1,
wherein the communication control unit receives information indicating a notification criteria for the information related to the communication channel from the another communication device, and
the notification unit notifies the another communication device of the information related to the communication channel based on the notification criteria.

3. The communication device according to claim 2,
wherein the information indicating notification criteria includes information indicating required quality which is a quality of the communication channel presented as a quality requirement from the another communication device, and
the notification unit notifies the another communication device of the information related to the communication channel based on the information indicating required quality.

4. The communication device according to claim 3,
wherein the notification unit notifies the another communication device of the information related to the communication channel at a timing when a quality of the communication channel stop satisfying the required quality.

5. The communication device according to claim 3,
wherein the information indicating notification criteria includes information indicating a designated time which is a time designated by the another communication device in addition to the information indicating required quality, and
the notification unit notifies the another communication device of the information related to the communication channel at a timing at which the quality of the communication channel is predicted to stop satisfying the required quality after a lapse of the designated time.

6. The communication device according to claim 1, comprising:
a prediction unit that performs prediction related to the communication channel,
wherein the notification unit notifies the another communication device of the information related to the communication channel based on a prediction result obtained by the prediction unit.

7. The communication device according to claim 6,
wherein the prediction unit predicts that the communication with the upstream network using the communication channel being currently used will be disconnected after a lapse of a predetermined time, and
the notification unit notifies, in a case where the disconnection is predicted, the another communication device of the information related to the communication channel.

8. The communication device according to claim 1,
wherein the communication control unit performs operations comprising:
receiving a requirement related to switching of the communication channel from the another communication device to which the information related to the communication channel has been notified; and
performing control related to the switching of the communication channel based on the requirement from the another communication device.

9. The communication device according to claim 8,
wherein the requirement related to the switching of the communication channel includes a requirement related to quality of the communication channel, and
when having received the requirement from the another communication device, the communication control unit switches the communication channel to a communication channel of a quality satisfying the requirement.

10. The communication device according to claim 8,
wherein the control related to the switching of the communication channel includes control of switching a connection using one of the communication functions to a connection bundling a plurality of the communication functions.

11. A communication device connectable to an upstream network via another communication device having a plurality of communication functions to connect to the upstream network using different communication channels individually, the communication device comprising:
a reception unit that receives, before switching of the communication channel, information related to the communication channel for the switching of the communication channel from the another communication device; and
a processing unit that performs processing related to a predetermined function that uses the upstream network based on the information related to the communication channel.

12. The communication device according to claim 11,
wherein the information related to the communication channel includes information predicting that the communication with the upstream network using the communication channel being currently used will be disconnected after a lapse of a predetermined time, and
when having acquired the information predicting the disconnection, the processing unit performs processing related to the predetermined function.

13. The communication device according to claim 12,
wherein, when having acquired the information predicting the disconnection, the processing unit performs stop processing of the predetermined function.

14. The communication device according to claim 12,
wherein, when having acquired the information predicting the disconnection, the processing unit performs processing of switching the upstream network currently used by the predetermined function to the upstream network different from the currently used upstream network.

15. The communication device according to claim 11, comprising:
an instruction unit that transmits a requirement related to the switching of the communication channel to the another communication device.

16. The communication device according to claim 15,
wherein the information related to the communication channel includes information related to the quality of the communication channel, and
the instruction unit presents a requirement related to the switching of the communication channel based on the information related to the quality of the communication channel.

17. A communication method executed by a communication device having a plurality of communication functions of connecting to an upstream network using different communication channels individually, the communication method comprising:
controlling communication with another communication device connected to the upstream network via the communication device; and
notifies, before switching the communication channel, the another communication device of information related to the communication channel for the switching of the communication channel.

18. A communication method executed by a communication device connectable to an upstream network via another communication device having a plurality of communication functions to connect to the upstream network using different communication channels individually, the communication method comprising:
acquiring, before switching of the communication channel, information related to the communication channel for the switching of the communication channel from the another communication device; and
performing processing related to a predetermined function that uses the upstream network based on the information related to the communication channel.

19. A program for causing a communication device, which has a plurality of communication functions of connecting to an upstream network using different communication channels individually, to function as components comprising:
a communication control unit that controls communication with another communication device connected to the upstream network via the communication device; and
a notification unit that notifies, before switching the communication channel, the another communication device of information related to the communication channel for the switching of the communication channel.

20. A program for causing a communication device, which is connectable to an upstream network via another communication device having a plurality of communication functions to connect to the upstream network using different communication channels individually, to function as components comprising:
an acquisition unit that acquires, before switching of the communication channel, information related to the communication channel for the switching of the communication channel from the another communication device; and
a processing unit that performs processing related to a predetermined function that uses the upstream network based on the information related to the communication channel.
